# EUROPEAN PATENT SPECIFICATION

(11) **EP 0 945 411 B1**
(45) Date of publication and mention of the grant of the patent: **12.05.2004**
(21) Application number: 99200833.4
(22) Date of filing: 18.03.1999
(51) Int. Cl.: C03B 13/00, C03B 13/08, C03C 17/00

(54) **Glass sheet**
Glasscheibe
Plaque de verre

(30) Priority: 20.03.1998 EP 98200872
(43) Date of publication of application: 29.09.1999
(73) Proprietor: GLAVERBEL, 1170 Bruxelles (BE)
(72) Inventor: Pilloy, Georges, GLAVERBEL, 6040 Jumet (BE)
(74) Representative: Farmer, Guy

(56) References cited:
- EP-A- 0 448 456
- US-A- 1 662 295
- US-A- 1 718 824

## Description

This invention relates to glass and particularly but not exclusively to glass sheets used for decorative purposes, for example, in furniture, sanitary installations and partitions.

Matt finished glass sheets may be produced by controlled acid attack on a surface of a pre-formed glass sheet. The acid attack produces a degree of surface roughness on the treated glass surface which results in reduced spectral reflection (due to greater diffusion of reflected light) and a fine matt appearance. When the process is used on relatively thick glass, for example 6mm thick glass, the resulting product my be used for furniture, for example for glass table tops. In this case, the process may be used to produce a fine, white surface appearance on the glass to create a translucent glass sheet. The process is also used on relatively thin glass, for example 2mm thick glass sheets, to manufacture anti-glare glass for use in picture frames; in this case the process is controlled to produce a fine matt finish which reduces specular reflection of incident light but allows a picture mounted behind the glass to be seen clearly. In each case, the process produces a very fine surface roughness. Unfortunately, the acid attack process is costly and is not environmentally friendly (use of and disposal of the acid presents difficulties).

Another way of producing 2mm thick anti-glare glass for picture frames involves passing molten glass through a pair of spaced, sand-blasted, parallel rollers as it emerges from a glass furnace. The sand-blasted rollers produce a fine surface impression on each side of the glass sheet; this increases diffusion of light reflected from the glass surface and confers at least some degree of anti-glare.

Use of 2mm thick anti-reflective glass is limited to applications in which the strength of the glass sheet is not critical and in which the glass does not play a structural role. Glass that is only 2mm thick is fragile and is too thin to have its breaking strength easily increased by tempering. In addition, glass for use in picture frames must have a sufficiently high resolution and be sufficiently distortion free to allow an image placed behind the glass to be seen clearly.

According to a first aspect, the present invention provides a glass sheet as defined in Claim 1.

The minimum thickness of 2.5 mm of the glass in accordance with Claim 1 enables it to be used in structural applications. The glass may have a minimum thickness of about 3mm; this further increases its possible application. The glass may have a thickness of about 3 mm; this may be particularly desirable if the glass is to be used in shower walls and shower partitions or in shelves, for example for refrigerators. The glass may have a thickness of about 4 mm; this may be particularly desirable if the glass is to be used in glazing panels, building partitions or furniture doors. The glass may have a thickness greater than about 4mm, for example, of about 5 mm, 6 mm, 7mm, 8 mm or thicker; this may be desirable for some furniture application, for example for glass table tops, or for glass steps and walkways. The glass may be strengthened or toughened, for example by being thermally or chemically tempered. The minimum thickness of 2.5 mm as defined in Claim 1 especially facilitates thermal tempering.

The surface roughness defined in the claims may be present over an entire surface of the glass sheet or over a substantial portion of the surface.

The glass sheet may have a surface roughness as defined in Claim 2 or Claim 3. This may be used to further control the visual aspect of the glass sheet.

The glass sheet may have a lower value of Sm than that defined in these claims. For example, the glass may have a value of Sm when measured as set out in Claim 1 of less than 450 µm, less than 400 µm, less than 350 µm or less than 300 µm. This may also be used to control the visual aspect of the glass sheet.

The surface roughness of the glass in accordance with the claims can be produced without resorting to techniques involving acid attack. One preferred manufacturing technique comprises the use of at least one roller having a desired surface roughness which is used to imprint the surface roughness into the molten glass surface; this is more cost effective and more environmentally friendly than acid attack processes.

Traditional patterned glass, for example the patterned glass CREPI which is marketed by Glaverbel SA, are produced by using an engraved, profiled roller to produce a pattern in surface relief in a molten glass sheet. The surface relief is relatively course and the profile it leaves in the glass can be readily felt by a person running his or her fingers across the glass surface. The technical effect that this surface relief produces is entirely different to the effect of the glass in accordance with the present invention which has a controlled surface roughness rather than a surface relief.

The surface roughness may be selected within the defined range to produce a surface finish which confers a diffusing effect upon the glass sheet. This may be particularly useful when the glass sheet is to be used in a building partition or a shower wall so as to provide a translucent panel which is not entirely transparent.

The glass sheet may have a resolution as defined in claim 8. The resolution (measurement of which is described further on) is a measure of the distortion of an image viewed through the glass. Glass for picture frames must have a low level of distortion (i.e. a high resolution) to enable an image placed behind the glass to be seen clearly. Glass in accordance with the present invention may have a far lower resolution (i.e. a higher distortion) than picture frame glass. This may be used to create an entirely different visual effect. The distortion may be specifically chosen so that an image or object viewed through the glass is discernible but blurred.

The invention may be used to produce a gloss of between about 20 and 120. Gloss, (measurement of which is described further on) is a measure of the shine or brilliance of a glass surface. The gloss may be less than 100; the gloss may be less than 50.

The glass sheet may have a surface roughness as defined in the claims on both or on only one of its surfaces. In the latter case, one surface of the glass sheet may be without any immediately discernible surface roughness. No glass sheet is ever completely flat; there is always some degree of surface roughness. What should be understood here is that without resorting to the use of laboratory equipment one surface may appear to be visually smooth and pattemless and smooth to touch in the same way as a surface of an ordinary piece of window glass appears to be smooth rather than roughened. This aspect of the invention may be advantageous, for example, where the glass sheet is used in a shower wall. Arranging the plane surface towards the inside of the shower facilitates cleaning of this surface and may prevent the build up of calcium deposits that would "grip" more easily to a roughened or profiled surface.

A further way at looking at the present invention is as the realisation that a glass sheet as defined in the claims can be used in ,for example, a building partition, a shower wall or shower enclosure, or for applications in furniture. This enables a series of new articles and products to be realised. Previous patterned glasses used in structural applications do not have the surface roughness of the present invention which results in its advantageous visual appearance. Known glass produced by acid attack has a surface roughness outside that required by the present invention and is costly and inconvenient to produce. Previously known anti-glare glass is too fragile and not physically suitable for the uses which can be achieved by means of the present invention.

Examples of the present invention will now be described, by way of example only, with reference to the accompanying drawings of which:
Fig 1 is a schematic side view illustrating one possible production process with respect to the present invention;
Fig 2 is a surface roughness chart of a glass in accordance with the present invention.

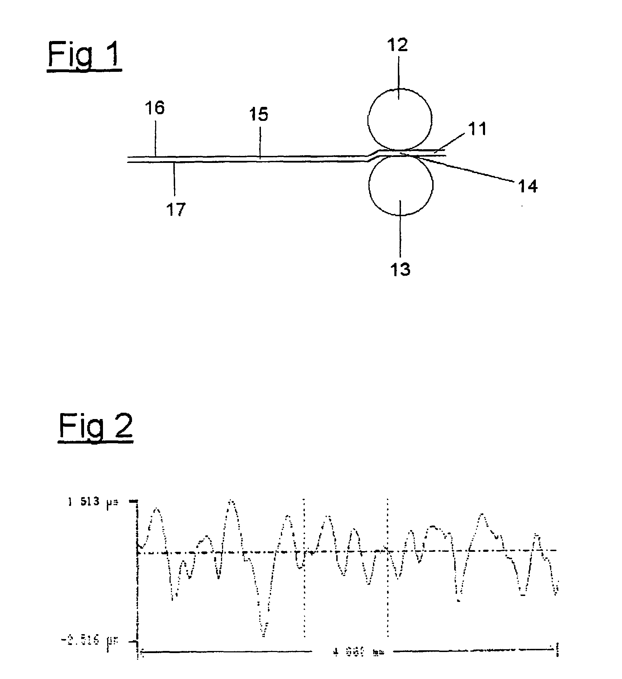

Fig 1 illustrates a rolled glass process. Molton glass 11 at a temperature above its softening point is fed from the output of a glass furnace (not shown) between a pair of parallel, spaced rollers 12,13. In this example, one of the rollers, in this case the upper roller 12 has a substantially flat, planar surface whilst the other roller 13 has a roughened surface which creates a surface roughness in the glass ribbon 15 after the molton glass has been squeezed between the rollers.

In this example, the roughened roller 13 is produced by sand blasting of a substantially smooth surfaced roller. The type of sand blasting may be selected, for example on a trial and error basis, so as to produce a roller which produces a desired surface finish within the range of the present invention. Factors which may be used to modify the results of the sand blasting include, for example, the type of sand used, the distribution of different sizes of grains of sand used, the number of passes made during the sand blasting process, the distance from the sand blasting nozzle to the target and the type of sand blasting equipment used. Alternatively, it may be possible to produce a suitably surface roughened roller by other means, for example, by engraving.

The glass ribbon 15 is pulled away as it emerges from the rollers 12,13 as is commonly known in the art. The resulting ribbon of glass has one surface 16 that is substantially smooth and one surface 17 having a desired surface roughness.

If it is desired to create a controlled surface roughness on each of the two surfaces of the glass then each of the rollers 12,13 may be provided with a suitably roughened surface.

An analysis of a surface of a 3 mm thick glass sheet having a controlled surface roughness is shown in Fig 2. This is a Taylor-Hobson Talysurf analysis of surface roughness, as commonly used for analysing surface roughness. The analysis consists of arranging a fine stylus having a calibrated point in contact with the surface to be analysed and slowly displacing the stylus across the surface so as to record all variations in the altitude of the surface. The following parameters were used to carry out this analysis:

| | |
|---|---|
| Type of machine | Taylor-Hobson Form Talysurf |
| Mode | Roughness |
| Cut off | 0.8 mm |
| Sample length | 4.0 mm |
| Short range filter | 0.8mm |
| Long range filter | 8mm |
| Reference | Straight |
| Ignore | 0% |

The following results, which are illustrated in Fig 2, were obtained for one particular glass sheet:
Rtm=2.683 µm
Rt1=2.747 µm
Rt2=4.029 µm
Rt3=2.016 µm
Rt4=2.236 µm
Rt5=2.341 µm
Sm=297.281 µm

Where:
Rtm is the average of all of the values Rt1, Rt2 .... etc. over the entire profile
Rt1 is the greatest difference in altitude between the highest peak and the lowest valley over the first cut-off portion of the sample
Rt2 is the greatest difference in altitude between the highest peak and the lowest valley over the second cut-off portion of the sample (and so on for Rt3, Rt4, Rt5 etc.)
Sm is the average of the distance between each time the profile crosses the average line; it represents an indication of the average distance between the main peaks of the profile

The short range filter and long range filter, as commonly used in the art of measuring surface roughness, are used to separate a characteristic measurement of surface roughness from an overall "waviness" of the sample and from very short wavelength effects.

The gloss of the sample on its one roughened surface was measured using a Gardner-Pacific Scientific type Glossmeter at 60° to the normal. This is a standard and well established test which gives an indication of the amount of reflectance of a glass surface. It involves directing a ray of light at an angle of 60° to the normal onto the surface to be analysed and measuring the intensity of the light reflected from the surface using a sensor in optical alignment with the source. The gloss of the sample measured was in the order of 110.

The resolution of the sample was then measured using a standard chart which has a series of spaced elements, each element comprising a first set of regularly spaced parallel lines and a second set of regularly spaced parallel lines arranged perpendicular to the first set. The elements form a series in which the spacing of the lines decreases from one element to the next. The sample was spaced 5 mm from the surface of the chart over a light box and the chart was observed from a distance of about 30 cm to judge the maximum number of lines per millimetre that could be seen in the elements of the chart through the sample. This is rather an objective test but gives an indication of the level of distortion caused by a glass sheet. With the sample in question, the finest lines that could be distinguished were spaced at 2.8 lines per mm.

A second sample of glass having a different form of surface roughness had the following characteristics:
Rtm=5.272 µm
Rt1 =5.124 µm
Rt2=5.241 µm
Rt3=3.357 µm
Rt4=5.814 µm
Rt5=6.826 µm
Sm=352.324 µm
when measured under the same conditions as those used for the first example.

Measurements of a third sample having a surface roughness on each of its faces gave the following results (each face being measured twice) :

| | | | |
|---|---|---|---|
| Face 1 | First measuement | Rtm=1.3 | Sm=405 µm |
| | Second measurement | Rtm=1.5 | Sm=512 µm |
| Face 2 | First measuement | Rtm=1.53 | Sm=320 µm |
| | Second measurement | Rtm=2 | Sm=379 µm |

## Claims

1. A glass sheet having a thickness of at least 2.5 mm **characterised in that** at least one of its surfaces has a surface roughness within the range:
Rtm greater than 0.5 µm and less than 50.0 µm; and
Sm greater than 100 µm and less than 1000 µm
when measured over a sample length of 4 mm with a cut-off of 0.8 mm, a short range filter of 0.8 mm and a long range filter of 8mm.

2. A glass sheet in accordance with Claim 1 in which at least one of the surfaces of the glass sheet has a surface roughness within the range:
Rtm greater than 1.8 µm and less than 50.0 µm; and
Sm greater than 100 µm and less than 500 µm
when measured over a sample length of 4 mm with a cut-off of 0.8 mm, a short range filter of 0.8 mm and a long range filter of 8mm.

3. A glass sheet in accordance with Claim 2 in which at least one of the surfaces of the glass sheet has a surface roughness within the range:
Rtm greater than 1.8 µm and less than 30.0 µm; and
Sm greater than 100 µm and less than 500 µm
when measured over a sample length of 4 mm with a cut-off of 0.8 mm, a short range filter of 0.8 mm and a long range filter of 8mm.

4. A glass sheet in accordance with any preceding claim in which both sides of the glass sheet have a surface roughness as defined in any one of Claims 1 to 3.

5. A glass sheet in accordance with any one of claims 1 to 3 in which one side of the glass sheet is without any immediately discernible surface roughness.

6. A glass sheet in accordance with Claim 5 in which the side of the glass sheet without any immediately discernible surface roughness has a surface roughness falling within the range:
Rtm less than 0.5 µm
when measured over a sample length of 4 mm with a cut-off of 0.8 mm, a short range filter of 0.8 mm and a long range filter of 8mm.

7. A glass sheet in accordance with any preceding claim in which the glass sheet has a resolution of less than 3 lines per mm at a distance of 5 mm.

8. A glass sheet in accordance with any preceding claim in which a glass surface having the defined surface roughness has a gloss of between about 20 and 120.

9. A glass sheet in accordance with any preceding claim in which the glass sheet is tempered.

10. A glass sheet in accordance with any preceding claim in which the glass sheet has a thickness of at least 3mm, 3.5mm or 4mm.

11. A shower partition comprising a glass sheet in accordance with any preceding claim.

12. Use of a glass sheet in accordance with any preceding claim in a building partition.

13. A method of manufacturing a glass sheet in accordance with any of claims 1 to 11 by producing a surface roughness on the glass sheet by producing an impression in the glass surface, by means of an accordingly roughened roller impinging on at least one surface of the glass.

## Patentansprüche

1. Glasscheibe mit einer Dicke von mindestens 2,5 mm, **dadurch gekennzeichnet, dass** mindestens eine von deren Oberflächen eine Oberflächenrauhigkeit innerhalb des Bereiches aufweist:
Rtm von größer als 0,5 µm und weniger als 50,0 µm und
Sm von größer als 100 µm und weniger als 1000 µm,
wenn gemessen über eine Probenlänge von 4 mm mit einem Cut-off von 0,8 mm, einem Nahbereichsfilter von 0,8 mm und einem Fernbereichsfilter von 8 mm.

2. Glasscheibe nach Anspruch 1, wobei mindestens eine der Oberflächen der Glasscheibe eine Oberflächenrauhigkeit innerhalb des Bereiches aufweist:
Rtm von größer als 1,8 µm und weniger als 50,0 µm und
Sm von größer als 100 µm und weniger als 500 µm,
wenn gemessen über eine Probenlänge von 4 mm mit einem Cut-off von 0,8 mm, einem Nahbereichsfilter von 0,8 mm und einem Fernbereichsfilter von 8 mm.

3. Glasscheibe gemäß Anspruch 2, wobei mindestens eine der Oberflächen der Glasscheibe eine Oberflächenrauhigkeit innerhalb des Bereiches aufweist:
Rtm von größer als 1,8 µm und weniger als 30,0 µm und
Sm von größer als 100 µm und weniger als 500 µm,
wenn gemessen über eine Probenlänge von 4 mm mit einem Cut-off von 0,8 mm, einem Nahbereichsfilter von 0,8 mm und einem Fernbereichsfilter von 8 mm.

4. Glasscheibe gemäß einem vorhergehenden Anspruch, wobei beide Seiten der Glasscheibe eine Oberflächenrauhigkeit aufweisen, wie in einem der Ansprüche 1 bis 3 definiert.

5. Glasscheibe gemäß einem der Ansprüche 1 bis 3, wobei eine Seite der Glasscheibe ohne jedwede unmittelbar erkennbare Oberflächenrauhigkeit ist.

6. Glasscheibe gemäß Anspruch 5, wobei die Seite der Glasscheibe ohne jedwede unmittelbar erkennbare Oberflächenrauhigkeit einer Oberlfächenrauhigkeit aufweist, die in den Bereich fällt:
Rtm von weniger als 0,5 µm,
wenn gemessen über eine Probenlänge von 4 mm mit einem Cut-off von 0,8 mm, einem Nahbereichsfilter von 0,8 mm und einem Fernbereichsfilter von 8 mm.

7. Glasscheibe gemäß einem vorhergehenden Anspruch, wobei die Glasscheibe eine Auflösung von weniger als drei Linien pro mm bei einer Distanz von 5 mm aufweist.

8. Glasscheibe gemäß einem vorhergehenden Anspruch, wobei eine Glasoberfläche, welche die definierte Oberflächenrauhigkeit aufweist, einen Glanz von zwischen etwa 20 und 120 aufweist.

9. Glasscheibe gemäß einem vorhergehenden Anspruch, wobei die Glasscheibe getempert ist.

10. Glasscheibe gemäß einem vorhergehenden Anspruch, wobei die Glasscheibe eine Dicke von mindestens 3 mm, 3,5 mm oder 4 mm aufweist.

11. Duschwand, umfassend eine Glasscheibe gemäß einem vorhergehenden Anspruch.

12. Verwendung einer Glasscheibe gemäß einem vorgehenden Anspruch in einer Gebäudewand.

13. Verfahren zur Herstellung einer Glasscheibe gemäß einem der Ansprüche 1 bis 11 durch Erzeugen einer Oberflächenrauhigkeit auf der Glasscheibe durch Erzeugen eines Prägung in die Glasoberfläche mittels einer demgemäß gerauhten Walze, welche auf mindestens eine Oberfläche des Glases auftrifft.

## Revendications

1. Vitrage ayant une épaisseur d'au moins 2,5 mm **caractérisé en ce que** au moins une de ses faces a une rugosité de surface dans la gamme :
Rtm supérieur à 0,5 µm et inférieur à 50,0 µm ; et
Sm supérieur à 100 µm et inférieur à 1000 µm ;
lorsqu'elle est mesurée sur une longueur d'échantillon de 4 mm, avec un seuil de 0,8 mm, un filtre courte distance de 0,8 mm et un filtre longue distance de 8 mm.

2. Vitrage conformément à la revendication 1, dans lequel au moins une des faces du vitrage a une rugosité de surface dans la gamme :
Rtm supérieur à 1,8 µm et inférieur à 50,0 µm ; et
Sm supérieur à 100 µm et inférieur à 500 µm ;
lorsqu'elle est mesurée sur une longueur d'échantillon de 4 mm, avec un seuil de 0,8 mm, un filtre courte distance de 0,8 mm et un filtre longue distance de 8 mm.

3. Vitrage conformément à la revendication 2, dans lequel au moins une des faces du vitrage a une rugosité de surface dans la gamme :
Rtm supérieur à 1,8 µm et inférieur à 30,0 µm ; et
Sm supérieur à 100 µm et inférieur à 500 µm ;
lorsqu'elle est mesurée sur une longueur d'échantillon de 4 mm, avec un seuil de 0,8 mm, un filtre courte distance de 0,8 mm et un filtre longue distance de 8 mm.

4. Vitrage conformément à l'une quelconque des revendications précédentes, dans lequel les deux côtés du vitrage ont une rugosité de surface telle que définie dans l'une quelconque des Revendications de 1 à 3.

5. Vitrage conformément à l'une quelconque des revendications de 1 à 3, dans lequel un côté du vitrage est dénué de rugosité de surface immédiatement discernable.

6. Vitrage conformément à la revendication 5, dans lequel le côté du vitrage dénué de rugosité de surface immédiatement discernable a une rugosité de surface tombant dans la gamme :
Rtm inférieur à 0,5 µm
lorsqu'elle est mesurée sur une longueur d'échantillon de 4 mm, avec un seuil de 0,8 mm, un filtre courte distance de 0,8 mm et un filtre longue distance de 8 mm.

7. Vitrage conformément à l'une quelconque des revendications précédentes, dans lequel le vitrage a une résolution inférieure à 3 lignes par mm à une distance de 5 mm.

8. Vitrage conformément à l'une quelconque des revendications précédentes, dans lequel une surface de verre ayant la rugosité de surface définie a une brillance entre environ 20 et 120.

9. Vitrage conformément à l'une quelconque des revendications précédentes, dans lequel le vitrage est trempé.

10. Vitrage conformément à l'une quelconque des revendications précédentes, dans lequel le vitrage a une épaisseur d'au moins 3 mm, 3,5 mm ou 4 mm.

11. Cloison de douche comprenant un vitrage conformément à l'une quelconque des revendications précédentes.

12. Utilisation d'un vitrage conformément à l'une quelconque des revendications précédentes dans une cloison de bâtiment.

13. Méthode de fabrication d'un vitrage conformément à l'une quelconque des revendications 1 à 11 en produisant une rugosité de surface sur le vitrage en produisant une impression dans la surface du verre au moyen d'un rouleau rugosifié en conséquence exerçant une action sur au moins une face du verre.
